(19) Europäisches Patentamt
European Patent Office
Office européen des brevets

(11) **EP 4 693 884 A1**

(12) **EUROPEAN PATENT APPLICATION**
published in accordance with Art. 153(4) EPC

(43) Date of publication:
**11.02.2026  Bulletin 2026/07**

(21) Application number: **24802855.7**

(22) Date of filing: **30.04.2024**

(51) International Patent Classification (IPC):
*H02P 7/291* (2016.01)    *H02K 3/12* (2006.01)
*B25F 5/00* (2006.01)

(52) Cooperative Patent Classification (CPC):
**H02K 3/12; H02P 7/291; B25F 5/00**

(86) International application number:
**PCT/CN2024/090730**

(87) International publication number:
**WO 2024/230573 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 10.05.2023  CN 202310520472
02.04.2024  CN 202410399232
02.04.2024  CN 202420664274 U
02.04.2024  CN 202410396182

(71) Applicant: **Nanjing Chervon Industry Co., Ltd.
Nanjing, Jiangsu 211106 (CN)**

(72) Inventors:
• **YANG, Dezhong
Nanjing, Jiangsu 211106 (CN)**
• **XU, Qian
Nanjing, Jiangsu 211106 (CN)**
• **ZHU, Hong
Nanjing, Jiangsu 211106 (CN)**

(74) Representative: **Sun, Yiming
HUASUN Patent- und Rechtsanwälte
Friedrichstraße 33
80801 München (DE)**

(54) **ELECTRIC TOOL AND TRAVELING DEVICE**

(57)    Provided are a power tool and a traveling device. The power tool includes a working component configured with the maximum output rotational speed; an electric motor configured with the maximum rotational speed; a transmission assembly configured with a transmission ratio; a driver circuit including one or more drive switches; and a controller for outputting a control signal to control the one or more drive switches of the driver circuit. At least one drive switch in the driver circuit includes a wide bandgap semiconductor switch, and the ratio of the required maximum rotational speed of the electric motor to the maximum rotational speed of the electric motor is less than or equal to 0.9. The electric motor system of the power tool has good electrical performance.

FIG. 6

## Description

This application claims priority to Chinese Patent Application No. 202310520472.9 filed with the China National Intellectual Property Administration (CNIPA) on May 10, 2023, Chinese Patent Application No. 202410399232.2 filed with the CNIPA on Apr. 2, 2024, Chinese Patent Application No. 202420664274.X filed with the CNIPA on Apr. 2, 2024, and Chinese Patent Application No. 202410396182.2 filed with the CNIPA on Apr. 2, 2024, the disclosures of which are incorporated herein by reference in their entireties.

## TECHNICAL FIELD

The present application relates to a power tool and a traveling device.

## BACKGROUND

In the related art, some products require low voltage, high rotational speed, and high power. To improve the power density of the electric motor, the product is generally designed from the aspects of increasing the rotational speed of the electric motor and reducing the copper loss of the electric motor.

This part provides background information related to the present application, and the background information is not necessarily the existing art.

## SUMMARY

An object of the present application is to solve or at least alleviate part or all of the preceding problems. An object of the present application is to provide a power tool and a traveling device with an electric motor system that has high efficiency and stable operation.

To achieve the preceding object, the present application adopts the technical solutions below.

A power tool includes an electric motor configured with the maximum rotational speed, where the maximum rotational speed is an electric motor performance parameter; and a driver circuit used for driving the electric motor to output power and including one or more drive switches, where the energized states of coil windings are switched by turning the drive switches on and off. The product of the maximum output rotational speed of a working component and the transmission ratio is defined as the required maximum rotational speed of the electric motor. At least one drive switch in the driver circuit includes a wide bandgap semiconductor switch, and the ratio of the required maximum rotational speed of the electric motor to the maximum rotational speed of the electric motor is less than or equal to 0.9.

In an example, a working component for implementing the function of the power tool is included, and the working component is configured with the maximum output rotational speed.

In an example, the electric motor is used for driving the working component, and the electric motor includes a stator, a rotor, and coil windings.

In an example, a transmission assembly is mechanically connected to the electric motor and the working component, and the transmission assembly is configured with a transmission ratio.

In an example, a direct current (DC) power supply supplies electrical energy to the electric motor.

In an example, a controller is connected to the driver circuit, and the controller is used for outputting a control signal to control the one or more drive switches of the driver circuit.

In an example, at least one drive switch in the driver circuit includes a wide bandgap semiconductor switch, and the ratio of the required maximum rotational speed of the electric motor to the maximum rotational speed of the electric motor is less than or equal to 0.85.

In an example, at least one drive switch in the driver circuit includes a wide bandgap semiconductor switch, and the ratio of the required maximum rotational speed of the electric motor to the maximum rotational speed of the electric motor is less than or equal to 0.8.

In an example, the cross section of each coil winding is non-circular.

In an example, the controller controls the ratio of the on time of a drive switch to the off time of the drive switch based on a pulse-width modulation (PWM) signal, and the frequency of the PWM signal is greater than 12 kHz.

In an example, the controller controls the ratio of the on time of a drive switch to the off time of the drive switch based on a pulse-width modulation (PWM) signal, and the dead time between the drive switches is less than or equal to 50ns.

In an example, the nominal output power of the electric motor is greater than or equal to 120 W and less than or equal to 5000 W.

In an example, the maximum rotational speed of the electric motor is greater than or equal to 15000 rpm and less than or equal to 60000 rpm.

In an example, the stator includes a stator core, the stator core includes teeth, every two teeth define a slot for accommodating the coil winding, and the slot fill factor of the electric motor is greater than or equal to 40%.

In an example, the shape of an outer edge of the coil winding changes with the shape of the slot so that the outer edge of the coil winding basically fits a sidewall of the slot.

In an example, each turn of the coil winding has the same cross-sectional area.

In an example, the nominal voltage of the DC power supply is less than or equal to 48 V.

In an example, the transmission ratio is greater than 1.

In an example, the maximum rotational speed of the electric motor is negatively correlated with the number of turns of the coil windings of the electric motor.

In an example, at least one drive switch in the driver circuit includes a gallium nitride transistor.

A power tool includes an electric motor configured to be rotatably and drivingly coupled to an output portion of the electric motor and configured with the maximum rotational speed, where the maximum rotational speed is an electric motor performance parameter; and a driver circuit used for driving the electric motor to output power and including one or more drive switches, where the energized states of coil windings are switched by turning the drive switches on and off. At least one drive switch in the driver circuit includes a wide bandgap semiconductor switch, and the ratio of the maximum rotational speed at the input end of the output portion to the maximum rotational speed of the electric motor is less than or equal to 0.9.

In an example, the output portion is configured with an input end for receiving power from the electric motor and an output end for implementing the function of the power tool.

In an example, the electric motor includes a stator, a rotor, and coil windings.

In an example, a DC power supply supplies electrical energy to the electric motor.

In an example, a controller is connected to the driver circuit, and the controller is used for outputting a control signal to control the one or more drive switches of the driver circuit.

A power tool includes an electric motor, where the electric motor includes a stator, a rotor, and coil windings disposed on the stator, and the cross section of each coil winding is non-circular. The power tool includes a driver circuit used for driving the electric motor to output power and including one or more drive switches, and the energized states of the coil windings are switched by turning the drive switches on and off. At least one drive switch in the driver circuit includes a gallium nitride transistor.

In an example, the electric motor is configured to be rotatably and drivingly coupled to an output portion of the electric motor.

In an example, a DC power supply supplies electrical energy to the electric motor.

In an example, a controller is electrically connected to the driver circuit, and the controller is used for outputting a control signal to control the one or more drive switches of the driver circuit.

A traveling device includes a traveling assembly including at least one traveling wheel supporting a body, where the traveling assembly is configured with the maximum output rotational speed; a traveling electric motor for driving the at least one traveling wheel to rotate; and a driver circuit for driving the traveling electric motor to output power, where the driver circuit includes one or more drive switches, and the energized states of the coil windings are switched by turning the drive switches on and off. At least one drive switch in the driver circuit includes a wide bandgap semiconductor switch, and the ratio of the required maximum rotational speed of the traveling electric motor to the maximum rotational speed of the traveling electric motor is less than or equal to 0.9.

In an example, the product of the maximum output rotational speed of the traveling assembly and the transmission ratio is defined as the required maximum rotational speed of the traveling electric motor.

In an example, a body and a DC power supply for supplying electrical energy to the traveling electric motor are included.

In an example, the traveling electric motor includes a stator, a rotor, and coil windings, the traveling electric motor is configured with the maximum rotational speed, and the maximum rotational speed is an electric motor performance parameter.

In an example, a transmission assembly mechanically connected to the traveling electric motor and the traveling assembly is included, and the transmission assembly is configured with a transmission ratio.

In an example, a controller connected to the driver circuit is included, and the controller is used for outputting a control signal to control the one or more drive switches of the driver circuit.

A traveling device includes a traveling assembly including at least one traveling wheel supporting a body, where the traveling assembly is configured with the maximum output rotational speed; a traveling electric motor for directly driving the at least one traveling wheel to rotate; and a driver circuit including one or more drive switches. When the ratio of the maximum output rotational speed of the traveling assembly to the maximum rotational speed of the traveling electric motor is less than or equal to 0.9, at least one drive switch in the driver circuit includes a wide bandgap semiconductor switch.

In an example, a body and a DC power supply for supplying electrical energy to the traveling electric motor are included.

In an example, the traveling electric motor includes a stator, a rotor, and coil windings, the traveling electric motor is configured with the maximum rotational speed, and the maximum rotational speed is an electric motor performance parameter.

In an example, a driver circuit for driving the traveling electric motor to output power is included, and the energized states of the coil windings are switched by turning the drive switches on and off.

In an example, a controller connected to the driver circuit is included, and the controller is used for outputting a control signal to control the one or more drive switches of the driver circuit.

A traveling device includes a traveling assembly including at least one traveling wheel supporting a body; and a traveling electric motor. The cross section of each coil winding is non-circular, and at least one drive switch in a driver circuit includes a gallium nitride transistor.

In an example, a body and a DC power supply for supplying electrical energy to the traveling electric motor are included.

In an example, the traveling electric motor is used for driving at least one traveling wheel to rotate.

In an example, the traveling electric motor includes a stator, a rotor, and coil windings disposed on the stator.

In an example, a driver circuit is used for driving the traveling electric motor to output power, the driver circuit includes one or more drive switches, and the energized states of the coil windings are switched by turning the drive switches on and off.

In an example, a controller is electrically connected to the driver circuit, and the controller is used for outputting a control signal to control the one or more drive switches of the driver circuit.

A power tool includes an electric motor. The electric motor includes a stator core, the stator core includes teeth, each two teeth define a slot for accommodating a coil winding, and the coil windings are used for generating a magnetic field. The coil winding disposed on each tooth is defined as an integral winding, and the shape of the outer edge of the integral winding changes with the shape of the slot so that the outer edge of the integral winding basically fits at least two sidewalls of the slot.

In an example, the electric motor includes a rotor, and the rotor includes a motor shaft rotating about a central axis.

In an example, the electric motor includes a stator, and the stator includes a stator core and coil windings.

In an example, the slot includes a first sidewall adjacent to a yoke portion, the first sidewall includes multiple curves, and the cross section of each turn of the coil winding includes at least one side that basically fits the curve of the first sidewall.

In an example, the cross section of at least one turn of the coil winding is non-circular.

In an example, the cross section of the coil winding includes a first edge and a second edge adjacent to the first edge, and the ratio of the length of the first edge to the length of the second edge is greater than 1.

In an example, the first edge of the coil winding matches the first sidewall, and the second edge matches the tooth.

In an example, the first edge of the coil winding matches the tooth, and the second edge matches the first sidewall.

In an example, coil windings of at least two types are wound around each tooth, and the coil windings of the at least two types have the same cross-sectional area.

In an example, coil windings of at least two types are wound around each tooth, and cross sections of adjacent coil windings are intermeshed with each other.

In an example, the power tool further includes a battery pack, and the nominal voltage of the battery pack is less than or equal to 48 V.

In an example, turns of the coil winding are thermally welded by laser.

## BRIEF DESCRIPTION OF THE DRAWINGS

FIG. 1 is a structural view of a first example of the present application.

FIG. 2 is an exploded view of an electric motor according to the present application.

FIG. 3 is a schematic sectional view of an electric motor according to the present application.

FIG. 4 is a control schematic diagram of an electric motor according to the present application.

FIG. 5 is a sectional view of an electric motor filled with round wires in the related art.

FIG. 6 is a sectional view of an electric motor filled with flat wire windings according to the present application.

FIG. 7 is a comparison diagram of the current waveform of the phase current ripple of an electric motor in which wide bandgap semiconductor switches are used in a driver circuit and the current waveform of the phase current ripple of an electric motor in which metal-oxide-semiconductor field-effect transistors (MOSFETs) made of Si are used in a driver circuit.

FIG. 8 is a sectional view illustrating a flat wire winding filling method in which an electric motor is filled with flat wire windings according to the present application.

FIG. 9 is a sectional view illustrating another flat wire winding filling method in which an electric motor is filled with flat wire windings according to the present application.

FIG. 10 is a torque-efficiency comparison diagram at different slot fill factors when an electric motor is filled with flat wire windings according to the present application.

FIG. 11 is a comparison diagram between the torque and rotational speed of an electric motor at different slot fill factors when the electric motor is filled with flat wire windings according to the present application.

FIG. 12 is a perspective view of a traveling device as another example of the present application.

FIG. 13 is a schematic view of FIG. 12 from another perspective.

**DETAILED DESCRIPTION**

To clearly illustrate technical solutions of the present application, an upper side, a lower side, a left side, a right side, a front side, and a rear side are defined in the drawings of the specification.

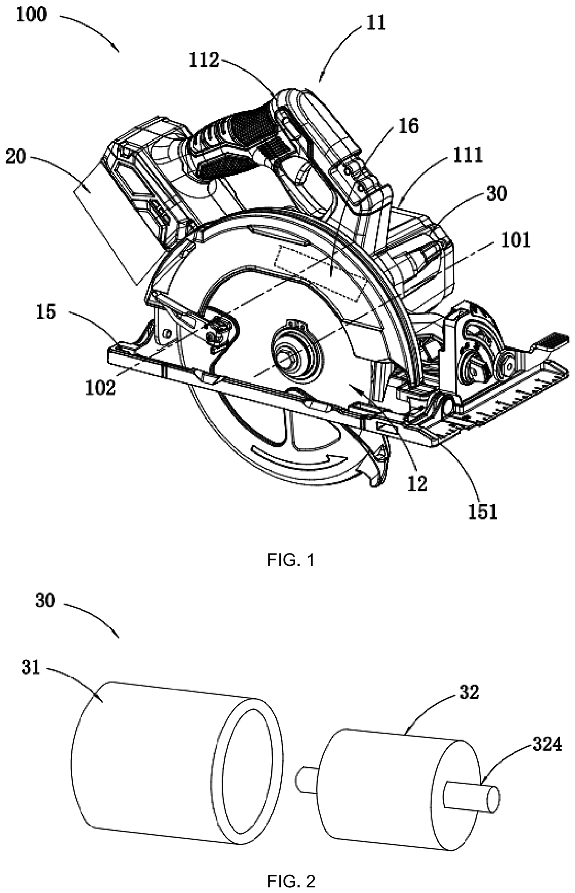

As shown in FIG. 1, a power tool is provided. In this example, the power tool is an electric circular saw 100. In some examples, the power tool may be a garden tool, such as a hedge trimmer, a blower, a mower, a chainsaw, a snow thrower, or a cleaning machine. Alternatively, the power tool may be a decorating tool, such as a screwdriver, a wrench, an electric hammer, a nail gun, or a sander. Alternatively, the power tool may be a sawing tool, such as a reciprocating saw or a jigsaw. Alternatively, the power tool may be a table tool, such as a table saw, a metal cutter, or an electric router. Alternatively, the power tool may be a grinding tool, such as an angle grinder or a sander. Alternatively, the power tool may be another power tool such as a lamp or a fan.

It is to be understood that any power tool driven by an electric motor may adopt the technical solutions disclosed in this example. Any power device adopting the technical solutions disclosed in this example falls within the scope of the present application. For example, the power tool may be a powerhead, and the powerhead includes the electric motor. The powerhead is configured to be adapted to some output assemblies to implement functions of the tool.

In this example, the electric circular saw 100 is used as an example. The electric circular saw 100 includes a housing 11, a working component 12, an electric motor 30, a DC power supply 20, and a base plate 15, and the working component 12 is a circular saw blade that can rotate about a first axis 101. In other alternative examples, the working component may be a grinding disc, a blade, or the like.

The housing 11 includes a body housing 111 and a grip 112. The body housing 111 accommodates at least the electric motor 30 and the saw blade. The body housing 111 is formed with or connected to the grip 112 for a user to operate.

The base plate 15 includes a base plate plane 151 for contacting a workpiece to be cut, and the base plate plane 151 extends in a first plane. The base plate 15 is rotatably connected to the housing 11 about a second axis 102, and the second axis 102 is parallel to the first axis 101 about which the saw blade rotates. In this manner, when the base plate 15 rotates relative to the housing 11 about the second axis 102, the dimension of the cutting portion of the saw blade extending to the lower side of the base plate plane 151 changes, thereby being capable of adjusting the dimension of the part to be cut from the workpiece.

The electric circular saw 100 further includes a transmission assembly 16 and an output shaft (not shown in the figure). The transmission assembly 16 and the output shaft are disposed between the electric motor 30 and the working component 12, that is, the saw blade. The transmission assembly 16 and the output shaft are used for transmitting the power of the electric motor 30 to the saw blade so that the saw blade performs cutting work with a certain torque. In some examples, the electric motor 30 directly drives the output shaft. The above does not affect the substance of the present application. The overall structure of the electric circular saw 100 is generally the same as that of a common electric circular saw and is not described in detail here.

In this example, the DC power supply 20 includes a battery pack. The battery pack is detachably connected to the housing 11. The battery pack is different in position for different types of power tools. The position of the battery pack does not affect the substantive content protected in the present application. In this example, the battery pack 20 is used as an energy source for the electric circular saw 100. It is to be noted that the battery pack 20 is used below instead of the DC power supply, but it does not serve as a limitation of the present invention.

In the present application, the nominal voltage of the battery pack 20 is less than or equal to 48 V. In some examples, the nominal voltage of the battery pack 20 is less than or equal to 36 V. In some examples, the nominal voltage of the battery pack 20 is less than 24 V. In this example, the nominal voltage of the battery pack 20 is 18 V. For the traveling device, the voltage of the traveling electric motor is limited. The nominal voltage generally refers to a voltage specified by the manufacturer or the vendor on the label, packaging, user manual, specification, advertisement, marketing document, or another support document of the battery pack so that a user knows which power tools can run with the battery pack. Alternatively, the nominal voltage of the battery pack 30 may be detected or calculated. The nominal voltage may be a voltage of the battery pack when the state of charge (SOC) of cells in the battery pack is 50%.

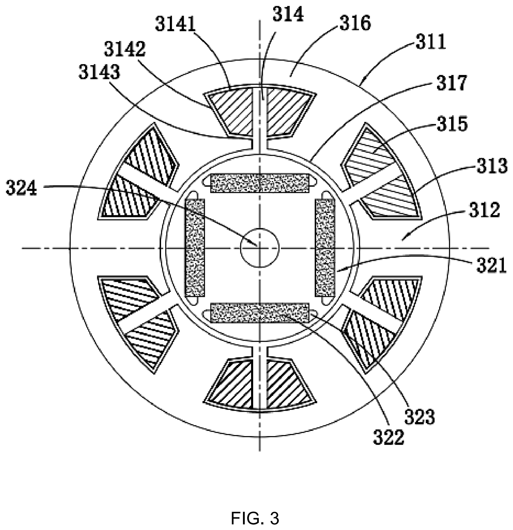

As shown in FIGS. 2 and 3, in this example, the electric motor 30 is a brushless DC electric motor (BLDC). The electric motor 30 includes a stator 31 and a rotor 32. The stator 31 includes a stator core 311. Coil windings 315 are disposed on the stator core 311. The rotor 32 includes a rotor core 321 and permanent magnets 322 on the rotor core 321, where the permanent magnets 322 are arranged at intervals along a circumferential direction of the rotor core 321 and used for generating a magnetic field. The rotor core 321 is provided with permanent magnet slots 323 for accommodating permanent magnets 322. A motor shaft 324 is formed on or connected to the rotor 32 and used for outputting power. The coil windings 315 are windings of conductive metal, such as copper windings.

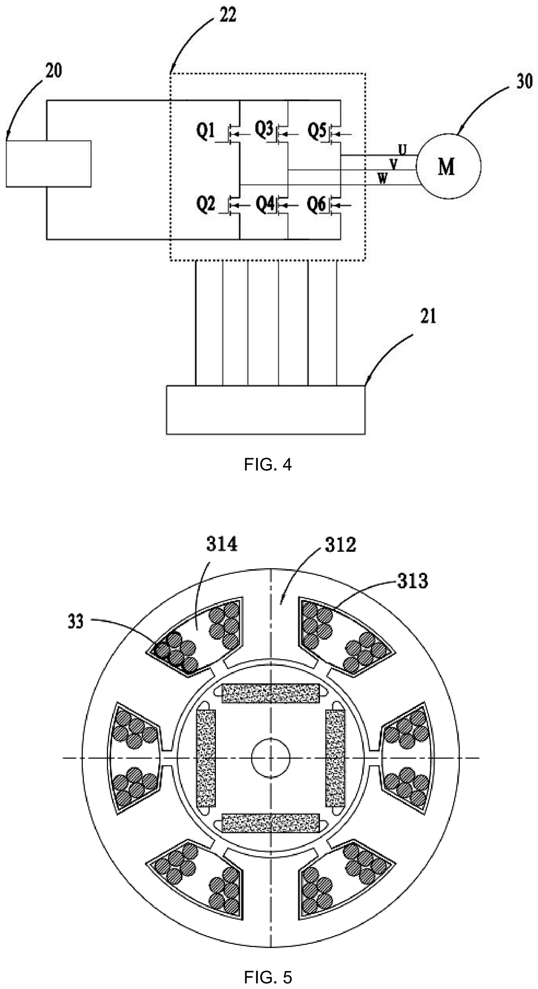

As shown in FIG. 4, the electric circular saw 100 further includes a driver circuit 22 and a controller 21 for controlling and driving the electric motor to operate. The driver circuit 22 is used for driving the electric motor 30 to output power. The driver circuit 22 is electrically connected to the electric motor 30 or connected to the electric motor 30 in a signal connection manner, including at least one of a digital signal connection, an analog signal connection, and a wireless signal connection. The driver circuit 22 is electrically connected to the controller 21 or connected to the controller 21 in a signal connection manner and receives a drive signal from the controller 21. The drive signal includes at least one of a digital signal connection, an analog signal connection, and a wireless signal connection. Driven by the drive signal outputted by the controller 21, the driver circuit 22 distributes the voltage to phases of windings on the stator 31 of the brushless electric motor according to a certain logical relationship so that the brushless electric motor 30 starts and generates continuous torque.

Referring to FIG. 4, the driver circuit 22 includes multiple drive switches Q1, Q2, Q3, Q4, Q5, and Q6. The driver circuit 22 is a circuit that switches energized states of the phases of windings of the brushless electric motor and controls energized currents of the phases of windings to drive the brushless electric motor to rotate. The sequence in which the phases of windings are on and the time for which each phase winding is on depend on the position of the rotor 32. To make the brushless electric motor rotate, the driver circuit 22 has multiple driving states. In a driving state, stator windings of the brushless electric motor generate a magnetic field, and the controller 21 outputs control signals based on different positions of the rotor 32 to control the driver circuit 22 to switch between the driving states. Therefore, the magnetic field generated by the coil windings 315 rotates to drive the rotor 32 to rotate, thereby driving the brushless electric motor. In this example, the case where the electric motor 30 is a three-phase electric motor is used as an example, and the drive switches Q form a bridge circuit. The drive switches Q1 to Q6 form a three-phase full-bridge circuit.

The controller 21 is disposed on a control circuit board. The control circuit board includes a printed circuit board (PCB) and a flexible printed circuit (FPC) board. The controller 21 adopts a dedicated control chip, for example, a single-chip microcomputer or a microcontroller unit (MCU). Specifically, the controller 21 controls on or off states of the switching elements in the driver circuit 171 through the control chip. In some examples, the controller 21 controls the ratio of the on time of the drive switch to the off time of the drive switch based on a PWM signal. It is to be noted that the control chip may be integrated into the controller 21 or may be independent of the controller 21, and the structural relationship between a driver chip and the controller 21 may be set according to an actual situation.

As shown in FIGS. 2 and 3, in this example, the electric motor 30 is a brushless inrunner. In other alternative examples, the electric motor 30 is a brushless outrunner. For an inrunner, the stator 31 is sleeved on the outer side of the rotor 32. For an outrunner, the rotor 32 is sleeved on the outer side of the stator 31. In this example, a brushless electric motor is configured to be a three-phase brushless electric motor. It is to be understood that the electric motor is not limited to the three-phase brushless electric motor and may be a DC electric motor of another type. The above does not affect the substance of the present application.

In this example, the coil windings 315 of the same phase are connected in series and parallel, and then the coil windings 315 of different phases are connected in a delta shape or a Y shape, thereby forming the input and output lines of the electric motor 30.

In this example, the stator core 311 further includes multiple teeth 312 extending inward along the circumference and insulating members 313. The insulating members 313 are disposed on the multiple teeth 312. The coil windings 315 are wound around the teeth 312 with the insulating members 313 placed in between. Every two teeth 312 define a slot 314 for accommodating the coil winding 315. The insulating member 313 is provided around the slot 314. The slot 314 includes a first sidewall 3141 adjacent to a yoke portion 316, second sidewalls 3142 on the teeth 312, and a third sidewall 3143 adjacent to a pole piece 317.

FIG. 5 is a sectional view of an electric motor in which coil windings adopt round wires 33 in the related art. Since the slot 314 and the insulating member 313 are both approximately trapezoidal in shape, the round wires 33 cannot easily fill the slot 314 at the edges. On the other hand, it is difficult to connect the round wires 33 tightly, and an air gap exists due to the tangential connection between two round wires 33. When the round wires 33 are used, to improve the slot fill factor, one approach is to use multiple strands of thin wires to form a single turn of the coil winding. However, parallel winding of multiple strands of wires increases the number of insulation layers and increases the internal resistance of the electric motor. The improvement in the slot fill factor is also limited. Another approach is to reduce the winding wire diameter and increase the number of winding turns. But increasing the number of winding turns causes the voltage of the electric motor to change. It is known from the related art that when other electrical parameters remain unchanged, the more the number of winding turns increases, the more the voltage needs to be increased accordingly. For example, to facilitate user operation of the handheld power tool, when the power tool is powered by DC, the weight of the battery pack needs to be controlled. However, increasing the voltage requires increasing the weight of the battery pack. On the other hand, during operation, high output rotational speed and high output power are required. Increasing the number of winding turns increases the internal resistance of the electric motor, resulting in low electric motor efficiency in a working condition where higher output power of the electric motor is required. Increasing the number of coil turns results in a decrease in the output rotational speed of the electric motor.

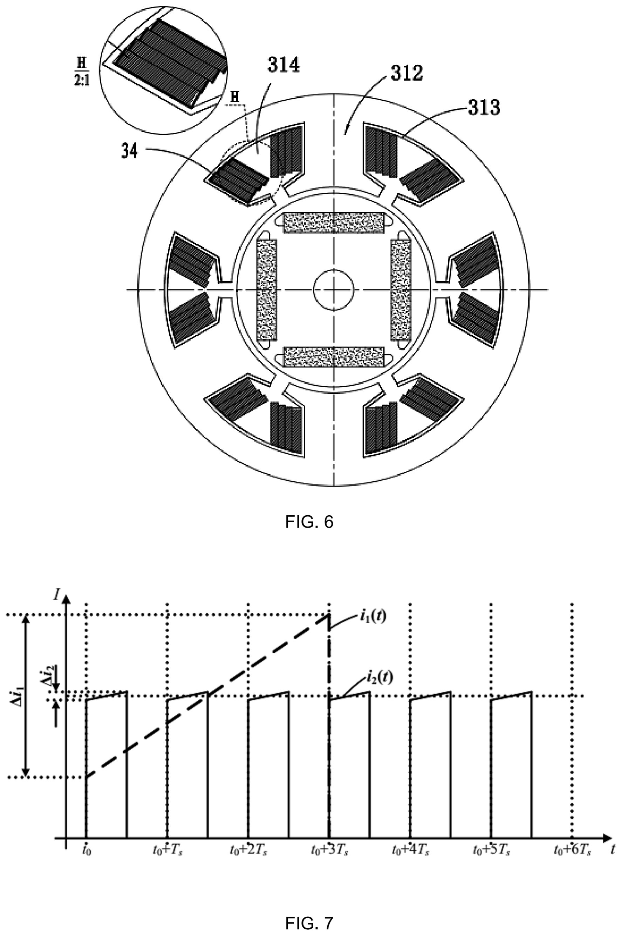

In the present application, as shown in FIG. 6, the cross section of the coil winding 315 of the electric motor 30 is non-circular. That is to say, the electric motor adopts flat wire windings 34. Since the flat wire windings 34 have a larger cross-sectional area, the number of turns of the flat wire windings 34 can be less than that of the round wires 33 when the electric motor adopting the flat wire windings 34 and the electric motor adopting the windings of round wires 33 have the same slot fill factor. Reducing the number of winding turns can reduce the internal resistance of the electric motor. In this manner, the copper loss of the electric motor can be reduced, thereby improving the electric motor efficiency. Each turn of the flat wire windings 34 has the same cross section. Alternatively, several flat wire windings 34 with the fixed cross sections and the same cross-sectional area may be provided to reduce the winding difficulty and the number of molds for the flat wire windings 34.

The electric motor 30 is configured to have a maximum rotational speed Vmax. The "maximum rotational speed" is determined by the characteristics of the electric motor.

The "maximum rotational speed" may be understood as the maximum rotational speed reached by the electric motor when the duty cycle or modulation ratio in the electric motor control system is not considered or when the duty cycle or modulation ratio is 1. The "maximum rotational speed" of the electric motor is determined by the number of coil turns, structure, and electrical characteristics of the electric motor. The maximum rotational speed Vmax of the electric motor 30 is negatively correlated with the number of turns of the coil windings of the electric motor 30. When the flat wire windings 34 are adopted to reduce the number of winding turns, the maximum rotational speed of the electric motor 30 is increased.

To satisfy the working condition, the output rotational speed of the power tool is preset, that is to say, the output rotational speed of the power tool is preset according to the working condition or environment, and the electric motor is designed to match the requirements of the power tool. The output rotational speed of the power tool is the output rotational speed of the working component 12. The output rotational speed of the working component 12 is related to the output rotational speed of the electric motor adjusted by the controller. To match the working condition requirements of the power tool, the output rotational speed of the electric motor adjusted by the controller is defined as the required rotational speed of the electric motor.

In some examples, the power tool includes an output portion rotationally coupled to the electric motor, and the electric motor drives the output portion. In some examples, the motor shaft is connected to the transmission assembly, and the transmission assembly is connected to the working component 12 so that the working component 12 can implement the function of the power tool. In such a power tool, the output portion includes all components in the entire transmission path between the transmission assembly and the working component 12. As shown in FIG. 1, the electric circular saw 100 is used as an example. The transmission assembly 16 is mechanically connected to the electric motor 30 and the working component 12 (for example, a saw blade). The transmission assembly 16 transmits the rotational speed of the electric motor 30 to the working component 12 at a certain transmission ratio. The transmission ratio of the transmission assembly 16 is one or more values set according to the working conditions. The transmission ratio may be greater than 1 or less than 1. Optionally, the transmission ratio is equal to 1. The required rotational speed of the electric motor is defined as the product of the rotational speed of the working component 12 and the transmission ratio. The required maximum rotational speed Vr of the electric motor is the product of the maximum rotational speed of the working component 12 and the corresponding transmission ratio. It is to be understood that the output portion is driven by the motor shaft, and an input end of the output portion is connected to the motor shaft. The rotational speed at the input end of the output portion is basically the same as the output rotational speed of the electric motor. For example, the rotational speed at the input end of the output portion is basically the same as the required rotational speed Vr of the electric motor. The rotational speed at an output end of the output portion is basically the same as the rotational speed of the working component 12.

The BLDC square wave control is used as an example, that is, the duty cycle is adjusted to adjust the rotational speed of the electric motor. The required maximum rotational speed Vr of the electric motor is basically the same as the product of the maximum rotational speed Vmax of the electric motor and the maximum duty cycle (P), that is, $Vr = Vmax * P$. The duty cycle is positively correlated with the required rotational speed of the electric motor. The larger the duty cycle, the larger the required rotational speed of the electric motor, and the greater the output rotational speed of the power tool. The output rotational speed of the power tool is the output rotational speed of the working component 12.

In the related art, when the working component 12 of the power tool is at the maximum output rotational speed, the controller 21 controls the drive switches to be turned on at the maximum duty cycle. To ensure the safety of the motor tool, in related products, the maximum duty cycle of the control signal outputted by the controller 21 of the power tool is close to 100%, that is, the required maximum rotational speed Vr of the electric motor is basically the same as the maximum rotational speed Vmax of the electric motor. In some examples in the related art, the maximum duty cycle of the control signal outputted by the controller 21 of the power tool is greater than or equal to 95%.

In the present application, since the number of turns of the coil windings 315 is reduced after the flat wire windings 34 are used, the maximum rotational speed of the electric motor 30 is increased. However, the maximum output rotational speed of the working component 12 does not change. Therefore, the required maximum rotational speed of the electric motor does not change. Therefore, the maximum duty cycle of the control signal outputted by the controller needs to be less than 95% or even smaller so that the maximum output rotational speed of the working component 12 can satisfy the working condition requirements.

The gap between the maximum rotational speed Vmax of the electric motor and the required maximum rotational speed Vr of the electric motor increases. Moreover, the maximum rotational speed of the electric motor is further increased, resulting in the operating frequency of the drive switches Q1, Q2, Q3, Q4, Q5, and Q6 in the driver circuit 22 needing to be increased accordingly, which in turn leads to an increase in the loss of the drive switches Q in the driver circuit 22.

In this example, the drive switches Q1, Q2, Q3, Q4, Q5, and Q6 include MOSFETs. At least one drive switch includes a wide bandgap semiconductor switch so that the maximum duty cycle of the control signal outputted by the controller 21 of the power tool 300 needs to be less than or equal to 90% so that the maximum output rotational speed of the working component 12 can satisfy the working condition requirements. Therefore, the ratio of the required maximum rotational speed Vr of the electric motor to the maximum rotational speed Vmax of the electric motor is less than or equal to 0.9. In some examples, the maximum duty cycle of the control signal outputted by the controller 21 of the power tool is less than or equal to 85% so that the maximum output rotational speed of the working component 12 can satisfy the working condition requirements. Therefore, the ratio of the required maximum rotational speed Vr of the electric motor to the maximum rotational speed Vmax of the electric motor is less than or equal to 0.85. In some examples, the maximum duty cycle of the control signal outputted by the controller 21 of the power tool is less than or equal to 80% so that the maximum output rotational speed of the working component 12 can satisfy the working condition requirements. Therefore, the ratio of the required maximum rotational speed Vr of the electric motor to the maximum rotational speed Vmax of the electric motor is less than or equal to 0.8.

Due to the increased loss of the drive switches in the driver circuit 22, in a specific device, the temperature rise of the MOSFETs increases, causing the temperature of the controller 21 to increase. In the present application, the wide bandgap semiconductor switching transistor is used as the drive switch. Compared with the traditional drive switch made of Si, the wide bandgap semiconductor switch has excellent high-frequency performance. Wide bandgap semiconductor switches include gallium nitride transistors, silicon carbide transistors, and gallium arsenide transistors.

In this example, the gallium nitride transistor is used as an example. The gallium nitride transistor has a large bandgap width and a higher critical field strength. Moreover, the gallium nitride transistor has high breakdown voltage, high electron saturation mobility, a small dielectric constant, strong radiation resistance, and good chemical stability. The gallium nitride power device can offer lower gate charge and faster switching speed. In this manner, the components of the control module can satisfy the requirements of high-speed electric motors and high-frequency switches.

In some examples, the power tool includes the output portion. For example, in a fan product or a mower product, the motor shaft is directly connected to the working component 12, that is, the working component 12 is directly connected to the motor shaft. In such a power tool, the output portion is the working component 12. The required maximum rotational speed Vr of the electric motor is basically the same as the maximum rotational speed of the working component 12 (a difference may exist due to connection loss or tolerance). It is to be understood that the output portion is driven by the motor shaft, the input end of the output portion is connected to the motor shaft, and the rotational speed at the input end of the output portion is basically the same as the required maximum rotational speed Vr of the electric motor. The rotational speed at the input end of the output portion is basically the same as the output rotational speed of the electric motor. In this example, the rotational speed at the input end of the output portion is basically the same as the rotational speed at the output end of the output portion. The rotational speed at an output end of the output portion is basically the same as the rotational speed of the working component 12.

In some examples, the maximum duty cycle of the control signal outputted by the controller 21 of the power tool 300 needs to be less than or equal to 90% so that the maximum output rotational speed of the working component 12 can satisfy the working condition requirements. Therefore, the ratio of the required maximum rotational speed Vr of the electric motor to the maximum rotational speed Vmax of the electric motor is less than or equal to 0.9. The ratio of the rotational speed at the input end of the output portion to the maximum rotational speed Vmax of the electric motor is less than or equal to 0.9. In some examples, the ratio of the rotational speed at the input end of the output portion to the maximum rotational speed Vmax of the electric motor is less than or equal to 0.85. In some examples, the ratio of the rotational speed at the input end of the output portion to the maximum rotational speed Vmax of the electric motor is less than or equal to 0.8.

Since the phase current ripple of the electric motor is inversely proportional to the PWM switching frequency, the phase current ripple of the electric motor is converted into torque ripple in the machine, generating vibration and reducing the driving accuracy and efficiency. As shown in FIG. 7, the $i_2(t)$ curve represents the phase current ripple of the electric motor in which gallium nitride transistors are used in the driver circuit, and the $i_1(t)$ curve represents the phase current ripple of the electric motor in which MOSFETs made of Si are used in the driver circuit. Through experimental tests, it is shown that the current ripple of the gallium nitride transistor is less than the current ripple of the silicon semiconductor transistor. In this manner, the heat generation of electronic devices caused by the increase in PWM switching frequency can be reduced so that the service life of the electronic devices is not affected.

Current root mean square (RMS) refers to the effective value of current, which can reflect the current characteristics more accurately than the current value. The calculation formula of current RMS is as follows, where $I_{1rms}$ denotes the current RMS value of the MOSFET made of Si, and $I_{2rms}$ denotes the current RMS value of the gallium nitride transistor.

$$\begin{cases} I_{1rms} = \sqrt{\dfrac{1}{T_s} \int_{t_0}^{t_0+T_s} i_1^2(t)\, dt} \\[4mm] I_{2rms} = \sqrt{\dfrac{1}{T_s} \int_{t_0}^{t_0+T_s} i_2^2(t)\, dt} \end{cases}$$

$t_0$ denotes time; $t_0 + T_s$ denotes the time after a cycle $T_s$ has elapsed from $t_0$; $i_1(t)$ denotes the phase current of the electric motor in which MOSFETs made of Si are used in the driver circuit; and $i_2(t)$ denotes the phase current of the electric motor in which gallium nitride transistors are used in the driver circuit.

According to the formula, the current RMS value when the gallium nitride transistors are used is less than the current RMS value when MOSFETs made of Si are used.

Therefore, based on the same PWM switching frequency, the phase current ripple of the electric motor in which MOSFETs made of Si are used is greater than the phase current ripple of the electric motor in which gallium nitride transistors are used. The modulated current RMS is the effective value of the current. The effective value of the current of the electric motor using MOSFETs made of Si is greater than the effective value of the current of the electric motor using gallium nitride transistors.

It is to be understood that when the electric motor is controlled through field-oriented control (FOC), the rotational speed is adjusted by adjusting the modulation ratio. In the present application, since the number of winding turns is reduced, the maximum rotational speed of the electric motor is increased, but the maximum output rotational speed of the working component 12 does not change. Therefore, the maximum modulation ratio of the control signal outputted by the controller 21 of the power tool is less than or equal to 90% so that the maximum output rotational speed of the working component 12 can satisfy the working condition requirements. The ratio of the required maximum rotational speed Vr of the electric motor to the maximum rotational speed Vmax of the electric motor is less than or equal to 0.9. In some examples, the maximum modulation ratio of the control signal outputted by the controller 21 of the power tool is less than or equal to 85% so that the maximum output rotational speed of the working component 12 can satisfy the working condition requirements. The ratio of the required maximum rotational speed Vr of the electric motor to the maximum rotational speed Vmax of the electric motor is less than or equal to 0.85. In some examples, the maximum modulation ratio of the control signal outputted by the controller 21 of the power tool is less than or equal to 80% so that the maximum output rotational speed of the working component 12 can satisfy the working condition requirements. The ratio of the required maximum rotational speed Vr of the electric motor to the maximum rotational speed Vmax of the electric motor is less than or equal to 0.8.

In this example, the maximum rotational speed Vmax of the electric motor 30 is greater than or equal to 15000 rpm and less than or equal to 60000 rpm. In some examples, the maximum rotational speed Vmax of the electric motor 30 ranges from 20000 rpm to 60000 rpm. In some examples, the maximum rotational speed Vmax of the electric motor 30 ranges from 25000 rpm to 60000 rpm. In some examples, the maximum rotational speed Vmax of the electric motor 30 ranges from 30000 rpm to 60000 rpm. In some examples, the maximum rotational speed Vmax of the electric motor 30 ranges from 35000 rpm to 60000 rpm. In some examples, the maximum rotational speed Vmax of the electric motor 30 ranges from 40000 rpm to 60000 rpm.

In some examples, Q1, Q3, and Q5 are defined as the high-side drive switches of phase bridges, and Q2, Q4, and Q6 are the low-side drive switches of phase bridges. The high-side drive switch and the low-side drive switch of each phase bridge circuit are connected to the same phase winding. The drive switches Q1 and Q2 are connected to the first phase winding W, the drive switches Q3 and Q4 are connected to the second phase winding V, and the drive switches Q5 and Q6 are connected to the third phase winding U. The three-phase windings W, V, and U of the brushless electric motor are connected to the DC power supply 20 through bridges formed by the six drive switches Q1 to Q6. The dead time between the high-side drive switches Q1, Q3, and Q5 and the low-side drive switches Q2, Q4, and Q6 is less than or equal to 50ns. In other words, the dead time between the high-side gallium nitride transistors and the low-side gallium nitride transistors is less than or equal to 50ns. In some examples, the dead time between the high-side gallium nitride transistors and the low-side gallium nitride transistors is less than or equal to 40ns, 30ns, 20ns, or 10ns. In this example, the controller 21 controls the ratio of the on time of the drive switch Q to the off time of the drive switch Q based on the PWM signal, and the frequency of the PWM signal is greater than 12 kHz. In some examples, the frequency of the PWM signal is greater than 20 kHz. In some examples, the frequency of the PWM signal is greater than or equal to 12 kHz and less than or equal to 5 GHz. In this manner, smoother and quieter operation with higher system efficiency can be achieved. Lower torque ripple can be obtained at high frequency and low loss.

Generally, if the current flowing through the electric motor 30 is the same, the lower the nominal voltage of the battery pack 20 is, the higher the efficiency value of the electric motor 30 is. A portion of the power actually outputted by the electric motor 30 is mechanically dissipated in the transmission assembly 16 and the like, and the remaining portion serves as the actual output applied to the workpiece by the working component 12 (the saw blade in this example). Therefore, even if the capacity of the DC power supply 20 is unchanged, the actual output power of the working component 12 can be increased by improving the overall electrical efficiency, thereby increasing the power density.

To improve the overall efficiency of the electric motor system and increase the power density, the electrical loss generated between the DC power supply and the electric motor (including the electric motor) needs to be reduced. In this example, the resistance of the coil windings 315 of the electric motor 30 is reduced to suppress the loss in the electric motor 30 (that is, to improve the efficiency of the electric motor system). In this example, to reduce the resistance of the coil windings 315 of the electric motor 30, on the one hand, a non-circular cross section is used to increase the cross-sectional area of the winding wire and reduce the number of turns. On the other hand, the slot fill factor of the windings of the electric motor 30 is improved by using the coil windings 315 with various non-circular cross-sectional shapes.

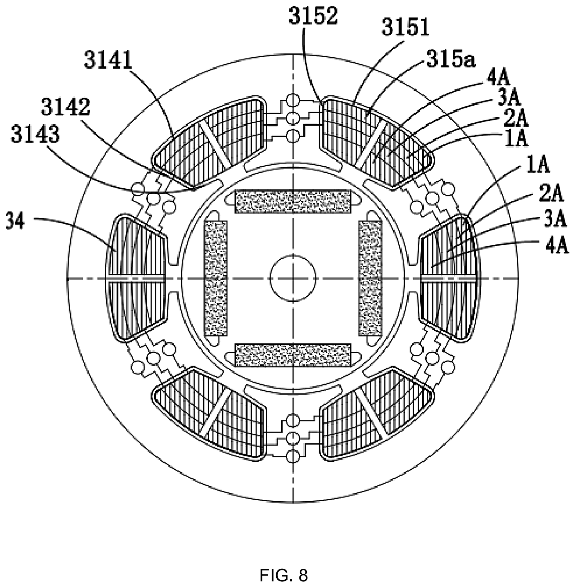

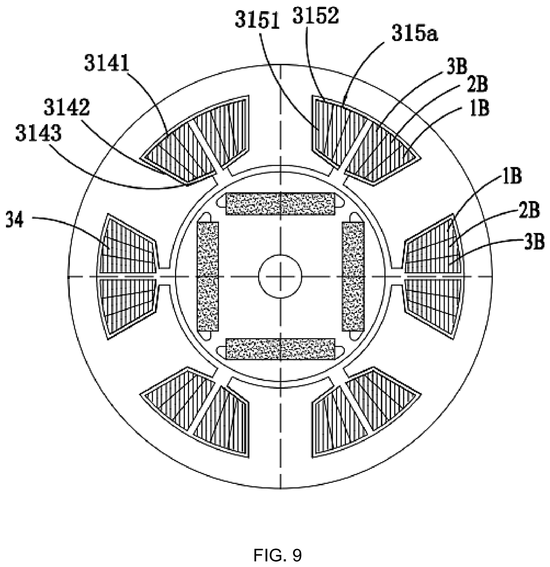

As shown in FIGS. 8 and 9, the coil winding 315 wound around each tooth 312 is configured to be an integral winding 315a. The shape of the outer edge of the integral winding 315a changes with the shape of the slot 314 so that the outer edge of the integral winding 315a basically fits at least two sidewalls of the slot 314. In this manner, the winding can fill the slot 314 as much as possible, thereby increasing the slot fill factor. The outer edge of the integral winding 315a is formed by the outer edge of a single coil in the coil windings 315. In the related art, as shown in FIG. 5, the outer edge of the integral winding 315a formed by the round wires 33 is basically wavy, so the integral winding 315a formed by the round wires 33 is in point contact with the sidewalls of the slot 314 and cannot fit the sidewalls of the slot 314, and an air gap exists. As shown in FIG. 6, the outer edge of the integral winding 315a formed by the conventional flat wire winding 34 is basically in a step shape or a step-like shape. Therefore, the conventional flat wire winding 34 can fit one sidewall of the slot 314, but the flat wire winding 34 is in point contact with the other two sidewalls and cannot fit the other two sidewalls, and an air gap exists.

In this example, the first sidewall 3141 of the slot 314 includes multiple curves. The cross section of each turn of the coil winding 315 includes at least one side that fits the curve of the first sidewall 3141. In this manner, the air gap between the coil winding 315 and the first sidewall of the slot 314 is reduced. In this example, the cross section of each turn of the coil winding 315 includes at least one side that fits the curve of the second sidewall 3142. In this manner, the air gap between the coil winding 315 and the second sidewall of the slot 314 is reduced.

FIG. 8 shows an example of the coil windings 315 and stator structure of the electric motor 30 according to the present application. The cross section of each turn of the coil winding 315 includes a first edge 3151 and a second edge 3152 adjacent to the first edge 3151. The ratio of the length of the first edge 3151 to the length of the second edge 3152 is greater than 1. In this example, the first edge 3151 of the coil winding 315 matches the first sidewall 3141, and the second edge 3152 matches the tooth 312, that is, the second edge 3152 matches the second sidewall 3142. It is to be understood that the flat wire windings 34 are wound in a vertical manner. In this example, coil windings 315 of at least two shapes are wound around each tooth 312, and the coil windings of different shapes have the same cross-sectional area. Specifically, the coil winding 315 adjacent to the first sidewall 3141 is set as the first layer winding 1A, and the coil winding 315 adjacent to the third sidewall is set as the last layer winding. According to different numbers of turns of the winding, in this example, the coil winding 315 adjacent to the third sidewall is the last layer winding 4A. The dimension of the first edge 3151 of the coil winding 315 decreases from the first layer winding 1A to the last layer winding 4A. The dimension of the second edge 3152 of the coil winding 315 increases from the first layer winding 1A to the last layer winding 4A. In this manner, it is ensured that the cross-sectional area remains unchanged from the first layer winding 1A to the last layer winding 4A. The cross-sectional areas of the coil windings 315 are uniform so that the current densities of the coil windings 315 are uniform. In some alternative examples, the cross-sectional areas of the coil windings 315 may be different.

In this example, to reduce the number of turns of the coil windings 315, when the coil windings 315 are wound in a vertical manner, the dimension of the first edge 3151 of the coil winding 315 is as large as possible while ensuring a safe gap between the windings. The specific dimension varies with the stator design of the electric motor 30.

In this example, the cross-sectional shape of the coil winding 315 is not limited to a regular polygon. The cross-sectional shape of the coil winding 315 varies with the shape of the first sidewall 3141 or the second sidewalls 3142 matching the coil winding 315. The coil winding 315 may substantially fill or completely fill the slot 314. In this example, the coil windings 315 are wound around the teeth 312 in a turn-by-turn manner. In some examples, the coil windings 315 are formed on the teeth 312 using a 3D printer.

In some examples, due to the different shapes of the slots 314, the coil windings 315 may have the same cross-sectional shape and the same cross-sectional area, as long as the coil windings 315 can substantially fill or completely fill the slots 314.

In this example, turns of the coil winding 315 are thermally welded by a laser welding machine. That is to say, the first layer winding 1A and a second layer winding 2A are thermally welded by the laser welding machine. The second layer winding 2A and a third layer winding 3A are thermally welded by the laser welding machine. The process similar to the above is performed until the last layer winding 4A is welded to the previous layer of winding. The coil winding 315 of each phase (U, V, or W) is provided with a lead-out wire and a lead-in wire for connection with other phases.

FIG. 9 shows another example of the coil windings 315 and stator structure of the electric motor 30 according to the present application. The cross section of each turn of the coil winding 315 includes a first edge 3151 and a second edge 3152 adjacent to the first edge 3151. The ratio of the length of the first edge 3151 to the length of the second edge 3152 is greater than 1. In this example, the first edge 3151 of the coil winding 315 matches the second sidewall 3142, and the second edge 3152 matches the tooth 312, that is, the second edge 3152 matches the first sidewall 3141. It is to be understood that the flat wire windings 34 are wound in a horizontal manner. In this example, coil windings 315 of at least two types are wound around each tooth 312, and the coil windings 315 have the same cross-sectional area. Specifically, the coil winding 315 adjacent to the second sidewall 3142 is set as the first layer winding 1B, and the coil winding 315 farthest from the second sidewall 3142 is set as the last layer winding. According to different numbers of turns of the winding, in this example, the coil winding 315 farthest from the second sidewall 3142 is the last layer winding 3B. The dimension of the first edge 3151 of the coil winding 315 increases from the first layer winding 1B to the last layer winding 3B. The dimension of the second edge 3152 of the coil winding 315 decreases from the first layer winding 1B to the last layer winding 3B. In this manner, it is ensured that the cross-sectional area remains unchanged from the first layer winding 1B to the last layer winding 3B. The cross-sectional areas of the coil windings 315 are uniform so that the current densities of the coil windings 315 are uniform. In some alternative examples, the cross-sectional areas of the coil windings 315 may be different. In this example, the second edge 3152 matches the first sidewall 3141, so the shape of the second edge 3152 varies with the shape of the first sidewall 3141. The coil winding 315 may substantially fill or completely fill the slot 314.

In this example, to reduce the number of turns of the coil windings 315, when the coil windings 315 are wound in a horizontal manner, the dimension of the first edge 3151 of the coil winding 315 is basically the same as the distance between the first sidewall 3141 and the third sidewall. The specific dimension varies with the stator design of the electric motor 30.

Turns of the windings are thermally welded by the laser welding machine. That is to say, the first layer winding 1B and a second layer winding 2B are thermally welded by the laser welding machine. The second layer winding 2B and the third layer winding 3B are thermally welded by the laser welding machine. The coil winding 315 of each phase (U, V, or W) is provided with a lead-out wire and a lead-in wire for connection with other phases.

In some examples, due to the different shapes of the slots 314, the coil windings 315 may have the same cross-sectional shape, as long as the coil windings 315 can substantially fill or completely fill the slots 314. In this example, the coil windings 315 are wound around the teeth 312 in a turn-by-turn manner. In some examples, the coil windings 315 are formed on the teeth 312 using a 3D printer.

A third example of the coil windings 315 and stator structure of the electric motor 30 is described below. Coil windings 315 of at least two types are wound around each tooth 312, and the cross sections of adjacent coil windings are intermeshed with each other. It is to be understood that the cross sections of two adjacent turns of the coil winding may match each other to form a concave-convex structure. Specifically, one side of the coil winding includes a triangular or trapezoidal tooth-like structure. In this manner, adjacent coil windings are arranged closely, thereby further improving the slot fill factor. In this example, the coil windings are wound around the teeth in a turn-by-turn manner. In some examples, the coil windings are formed on the teeth using a 3D printer.

Turns of the windings are thermally welded by the laser welding machine. That is to say, the first layer winding and the second layer winding are thermally welded by the laser welding machine. The second layer winding and the third layer winding are thermally welded by the laser welding machine. The process similar to the above is performed until the last layer winding is welded to the previous layer of winding. The coil windings 315 of three phases (U, V, and W) are electrically connected via the PCB.

In this example, the stator core 311 is formed by assembling multiple split cores along the circumferential direction. In some examples, the stator core 311 may be an integral structure. In this example, the teeth 312 of the stator core 311 have a uniform width, and the slots 314 also have a uniform width. In some examples, the teeth 312 of the stator core 311 have unequal widths, and the slots 314 also have unequal widths. The above does not affect the substance of the present application.

The coil windings 315 are configured to have the preceding structure and shape so that the gap between the coil windings 315 can be reduced, and the contact area can be increased, thereby improving the thermal conductivity between the coil windings 315 of the electric motor 30 and effectively suppressing the temperature rise of the electric motor 30.

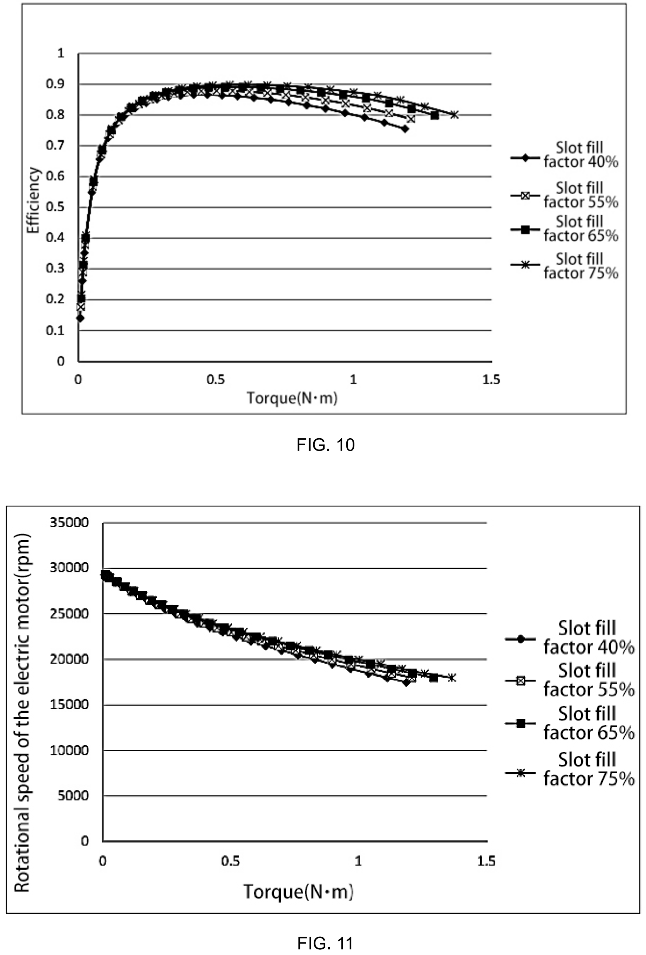

On the other hand, as can be seen from the test results, when the electric motor using the round wires 33 and the electric motor using the flat wire windings 34 have the same specification, the electric motor using the flat wire windings 34 has a significantly higher slot fill factor than the electric motor using the round wires 33 so that the electric motor using the flat wire windings 34 has lower power consumption and higher working efficiency. In this example, compared with the electric motor using the round wires 33 and having the same specification, the electric motor using the flat wire windings 34 has a slot fill factor greater than or equal to 40%. In some examples, the slot fill factor of the electric motor using the flat wire windings 34 is greater than or equal to 45%, 50%, 55%, 60%, 65%, 70%, 75%, or 80%. As shown in FIG. 10, based on different slot fill factors, in the case where the output torque is the same, the higher the slot fill factor of the electric motor is, the higher the efficiency of the electric motor is. As shown in FIG. 11, based on different slot fill factors, in the case where the output torque is the same, the higher the slot fill factor of the electric motor 30 is, the higher the maximum rotational speed of the electric motor is, and the higher the power density of the electric motor is. In this example, by increasing the slot fill factor and reducing the number of turns of the winding coil, the electric motor system in which the drive switches Q in the driver circuit adopt the gallium nitride transistors has higher efficiency and higher power density.

In some examples, the output power of a high-speed brushless electric motor in which the driver circuit adopts the preceding gallium nitride transistors, the number of turns of coil windings is small, and the slot fill factor is high ranges from 120 W to 3000 W. In some examples, the output power of the brushless electric motor ranges from 120 W to 500 W. In some examples, the output power of the brushless electric motor ranges from 500 W to 1500 W. In some examples, the output power of the brushless electric motor ranges from 1500 W to 2000 W. In some examples, the output power of the brushless electric motor ranges from 2000 W to 2500 W. In some examples, the output power of the brushless electric motor ranges from 2500 W to 3000 W.

In some examples, the output torque of the brushless electric motor using the preceding technical solution ranges from 0.1 N·m to 8 N·m. In some examples, the output torque of the brushless electric motor ranges from 0.1 N·m to 3 N·m. In some examples, the output torque of the brushless electric motor ranges from 3 N·m to 5 N·m. In some examples, the output torque of the brushless electric motor ranges from 5 N·m to 8 N·m.

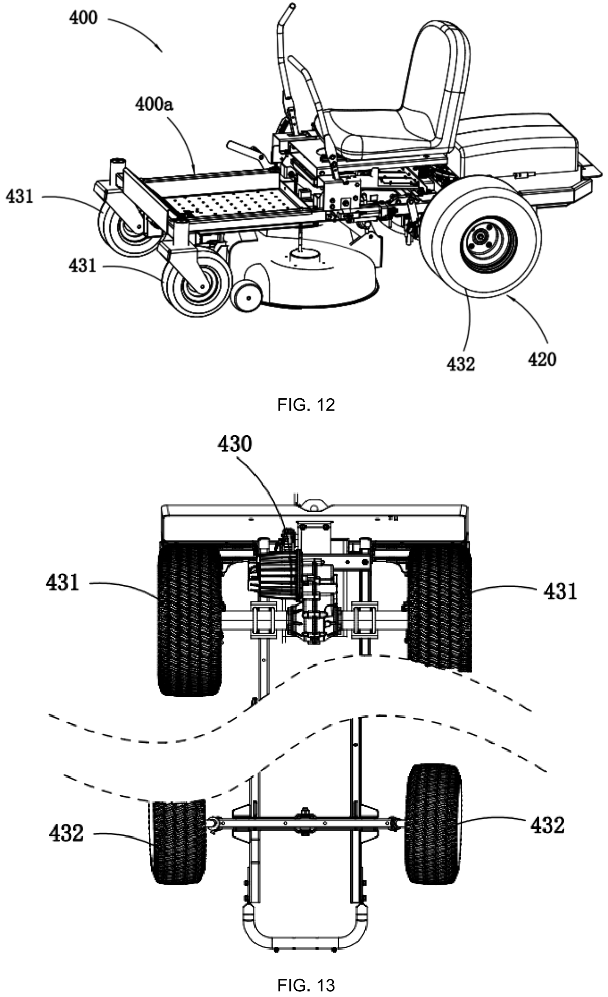

As another example of the present application, as shown in FIGS. 12 and 13, the present application provides a traveling device 400. The traveling device 400 is specifically a riding mower, which can travel outdoors and mow grass. It is to be understood that the traveling device 400 may be another vehicle that only travels outdoors such as a utility vehicle (UTV) and may also be a dune buggy, a farmer's vehicle, a golf cart, or an all-terrain vehicle (ATV). The traveling device 400 may also be a vehicle that can implement another function in addition to the traveling function, like the riding mower shown in this example, such as a snow thrower that can not only travel outdoors but also implement the snow removal function. The traveling device 400 may also be an agricultural machinery vehicle, such as a harvester or a pesticide spraying vehicle. Of course, it is to be understood that the traveling device 400 may be a cleaning machine.

The traveling device 400 includes a body 400a and a traveling assembly 420. The traveling assembly 420 is connected to the body 400a to support the body 400a. The traveling assembly 420 can drive the traveling device 400 to travel at least along the front and rear direction. The traveling device 400 further includes a traveling electric motor 430 for driving the traveling assembly 420. The traveling assembly 420 includes rear traveling wheels 431 and front traveling wheels 432. The traveling electric motor 430 drives the rear traveling wheels 431 or the front traveling wheels 432 to rotate so that the traveling device 400 can travel on the ground. Two traveling electric motors 430 may be provided, and the two traveling electric motors 430 drive the two rear traveling wheels 431, respectively so that the outdoor traveling device 400 can turn in other directions deviating from the front and rear direction.

The body 400a includes a working component for implementing a tool function and a drive electric motor for driving the working component. In this example, the working component is a mowing blade or a mowing disc. The drive electric motor is an electric motor disposed in the body and connected to the mowing blade or the mowing disc. It is to be understood that for the working component and the drive electric motor for driving the working component, reference may be made to the working component 12 and the electric motor 30 of the power tool 100 in the preceding example, or the working component and the drive electric motor for driving the working component belong to the working component 12 and the electric motor 30 of the power tool 100 in the preceding example. Therefore, the structure and principle of the driver circuit of the electric motor of the preceding power tool are also applicable. The structure and principle of the electric motor 30 of the preceding power tool are also applicable.

In this example, the structure of the traveling electric motor 430 is similar to the structure of the electric motor 30 of the power tool. Therefore, the structure and parameters of the electric motor shown in FIGS. 8 to 11 are also applicable, and the details are not repeated here.

The traveling electric motor 430 is configured to have a maximum rotational speed V'max. The "maximum rotational speed" is determined by the characteristics of the electric motor. The "maximum rotational speed" may be understood as the maximum rotational speed reached by the traveling electric motor 430 when the duty cycle or modulation ratio in the traveling electric motor 430 control system is not considered or when the duty cycle or modulation ratio is 1. The "maximum rotational speed" of the traveling electric motor 430 is determined by the number of coil turns, structure, and electrical characteristics of the electric motor. The maximum rotational speed V'max of the traveling electric motor 430 is negatively correlated with the number of turns of the coil windings of the traveling electric motor 430. When the flat wire windings 34 are adopted to reduce the number of winding turns, the maximum rotational speed of the traveling electric motor 430 is increased.

To satisfy the working conditions, the output rotational speed of the traveling assembly 420 is preset, that is to say, the output rotational speed of the traveling assembly 420 is set according to the user's input and the preset rule, and the traveling electric motor 430 is designed to match the user's input requirements. The output rotational speed of the traveling assembly 420 is related to the output rotational speed of the traveling electric motor 430 adjusted by the controller. To match the user's input requirements, the output rotational speed of the traveling electric motor 430 adjusted by the controller is defined as the required rotational speed of the traveling electric motor 430.

In some examples, the traveling electric motor 430 is mechanically connected to the traveling assembly 420 via a transmission assembly. The transmission assembly transmits the rotational speed of the traveling electric motor 430 to the traveling assembly 420 at a certain transmission ratio. The transmission ratio of the transmission assembly is one or more values set according to the working conditions. The transmission ratio may be greater than 1 or less than 1. Optionally, the transmission ratio is equal to 1. The required rotational speed of the traveling electric motor is defined as the product of the rotational speed of the traveling assembly 420 and the transmission ratio. The required maximum rotational speed V'r of the traveling electric motor is the product of the maximum rotational speed of the traveling assembly 420 and the corresponding transmission ratio.

The BLDC square wave control is used as an example, that is, the duty cycle is adjusted to adjust the rotational speed of the traveling electric motor. The required maximum rotational speed V'r of the traveling electric motor is basically the same as the product of the maximum rotational speed V'max of the traveling electric motor and the maximum duty cycle (P), that is, V'r = V'max * P. The duty cycle is positively correlated with the required rotational speed of the traveling electric motor. The larger the duty cycle, the larger the required rotational speed of the traveling electric motor. The output rotational speed of the power tool is the output rotational speed of the traveling assembly 420.

In the related art, when the traveling assembly 420 of the power tool is at the maximum output rotational speed, the controller 21 controls the drive switches to be turned on at the maximum duty cycle. To ensure the safety of the traveling electric motor 430, in related products, the maximum duty cycle of the control signal outputted by the controller 21 is close to 100%, that is, the required maximum rotational speed V'r of the traveling electric motor is basically the same as the maximum rotational speed V'max of the traveling electric motor. In some examples in the related art, the maximum duty cycle of the control signal outputted by the controller 21 of the power tool is greater than or equal to 95%.

In the present application, since the number of turns of the coil windings 315 is reduced after the flat wire windings 34 are used, the maximum rotational speed of the traveling electric motor 430 is increased. However, the maximum output rotational speed of the traveling assembly 420 does not change. Therefore, the required maximum rotational speed of the traveling electric motor does not change. Therefore, the maximum duty cycle of the control signal outputted by the controller needs to be less than 95% or even smaller so that the maximum output rotational speed of the traveling assembly 420 can satisfy the working condition requirements.

The gap between the maximum rotational speed V'max of the traveling electric motor and the required maximum rotational speed V'r of the traveling electric motor increases. Moreover, the maximum rotational speed of the traveling electric motor is further increased, resulting in the operating frequency of the drive switches Q1, Q2, Q3, Q4, Q5, and Q6 in the driver circuit 22 needing to be increased accordingly, which in turn leads to an increase in the loss of the drive switches Q in the driver circuit 22.

In this example, the drive switches Q1, Q2, Q3, Q4, Q5, and Q6 include MOSFETs. At least one drive switch includes a wide bandgap semiconductor switch so that the maximum duty cycle of the control signal outputted by the controller 21 needs to be less than or equal to 90% so that the maximum output rotational speed of the traveling assembly 420 can satisfy the working condition requirements. Therefore, the ratio of the required maximum rotational speed V'r of the traveling electric motor to the maximum rotational speed V'max of the traveling electric motor is less than or equal to 0.9. In some examples, the maximum duty cycle of the control signal outputted by the controller 21 is less than or equal to 85% so that the maximum output rotational speed of the traveling assembly 420 can satisfy the working condition requirements. Therefore, the ratio of the required maximum rotational speed V'r of the traveling electric motor to the maximum rotational speed V'max of the traveling electric motor is less than or equal to 0.85. In some examples, the maximum duty cycle of the control signal outputted by the controller 21 is less than or equal to 80% so that the maximum output rotational speed of the traveling assembly 420 can satisfy the working condition requirements. Therefore, the ratio of the required maximum rotational speed V'r of the traveling electric motor to the maximum rotational speed V'max of the traveling electric motor is less than or equal to 0.8.

Due to the increased loss of the drive switches in the driver circuit 22, in a specific device, the temperature rise of the MOSFETs increases, causing the temperature of the controller 21 to increase. In the present application, the wide bandgap semiconductor switching transistor is used as the drive switch. Compared with the traditional drive switch made of Si, the wide bandgap semiconductor switch has excellent high-frequency performance. Wide bandgap semiconductor switches include gallium nitride transistors, silicon carbide transistors, and gallium arsenide transistors. In this example, the gallium nitride transistor is used as an example. The gallium nitride transistor has a large bandgap width and a higher critical field strength. Moreover, the gallium nitride transistor has high breakdown voltage, high electron saturation mobility, a small dielectric constant, strong radiation resistance, and good chemical stability. The gallium nitride power device can offer lower gate charge and faster switching speed. In this manner, the components of the control module can satisfy the requirements of high-speed traveling electric motors and high-frequency switches.

In some examples, the traveling electric motor 430 is directly connected to the traveling assembly 420, that is, the traveling assembly 420 is directly connected to the traveling electric motor 430. The required maximum rotational speed V'r of the traveling electric motor is basically the same as the maximum output rotational speed of the traveling assembly 420 (a difference may exist due to connection loss or tolerance). In some examples, the maximum duty cycle of the control signal outputted by the controller 21 needs to be less than or equal to 90% so that the maximum output rotational speed of the traveling assembly 420 can satisfy the working condition requirements. Therefore, the ratio of the maximum output rotational speed of the traveling assembly 420 to the maximum rotational speed V'max of the traveling electric motor is less than or equal to 0.9. In some examples, the ratio of the maximum output rotational speed of the traveling assembly 420 to the maximum rotational speed V'max of the traveling electric motor is less than or equal to 0.85. In some examples, the ratio of the maximum output rotational speed of the traveling assembly 420 to the maximum rotational speed V'max of the traveling electric motor is less than or equal to 0.8.

## Claims

1. A power tool, comprising:

   a working component used for implementing a function of the power tool and configured with a maximum output rotational speed;
   an electric motor used for driving the working component and comprising a stator, a rotor, and coil windings, wherein the electric motor is configured with a maximum rotational speed, and the maximum rotational speed is an electric motor performance parameter;
   a transmission assembly mechanically connected to the electric motor and the working component and configured with a transmission ratio;
   a direct current (DC) power supply for supplying electrical energy to the electric motor;
   a driver circuit for driving the electric motor to output power, wherein the driver circuit comprises one or more drive switches, and energized states of the coil windings are switched by turning the one or more drive switches on and off; and
   a controller connected to the driver circuit and used for outputting a control signal to control the one or more drive switches of the driver circuit;
   wherein a product of the maximum output rotational speed of the working component and the transmission ratio is defined as a required maximum rotational speed of the electric motor, wherein at least one drive switch in the driver circuit comprises a wide bandgap semiconductor switch, and a ratio of the required maximum rotational speed of the electric motor to the maximum rotational speed of the electric motor is less than or equal to 0.9.

2. The power tool of claim 1, wherein at least one drive switch in the driver circuit comprises the wide bandgap semiconductor switch, and the ratio of the required maximum rotational speed of the electric motor to the maximum rotational speed of the electric motor is less than or equal to 0.85.

3. The power tool of claim 1, wherein at least one drive switch in the driver circuit comprises the wide bandgap semiconductor switch, and the ratio of the required maximum rotational speed of the electric motor to the maximum rotational speed of the electric motor is less than or equal to 0.8.

4. The power tool of claim 1, wherein a cross section of each of the coil windings is non-circular.

5. The power tool of claim 1, wherein the controller controls a ratio of an on time of a drive switch of the one or more drive switches to an off time of the drive switch based on a pulse-width modulation (PWM) signal, and frequency of the PWM signal is greater than 12 KHz.

6. The power tool of claim 1, wherein the controller controls a ratio of an on time of a drive switch of the one or more drive switches to an off time of the drive switch based on a PWM signal, and a dead time between the one or more drive switches is less than or equal to 50ns.

7. The power tool of claim 1, wherein nominal output power of the electric motor is greater than or equal to 120 W and less than or equal to 5000 W.

8. The power tool of claim 1, wherein the maximum rotational speed of the electric motor is greater than or equal to 15000 rpm and less than or equal to 60000 rpm.

9. The power tool of claim 4, wherein the stator comprises a stator core, the stator core comprises teeth, every two teeth define a slot for accommodating a coil winding of the coil windings, and a slot fill factor of the electric motor is greater than or equal to 40%.

10. The power tool of claim 9, wherein a shape of an outer edge of the coil winding changes with a shape of the slot so that the outer edge of the coil winding basically fits a sidewall of the slot.

11. The power tool of claim 9, wherein each turn of the coil winding has a same cross-sectional area.

12. The power tool of claim 1, wherein a nominal voltage of the DC power supply is less than or equal to 48 V.

13. The power tool of claim 1, wherein the transmission ratio is greater than 1.

14. The power tool of claim 1, wherein the maximum rotational speed of the electric motor is negatively correlated with a number of turns of the coil windings of the electric motor.

15. The power tool of claim 1, wherein at least one drive switch in the driver circuit comprises a gallium nitride transistor.

16. A power tool, comprising:

an electric motor configured to be rotatably and drivingly coupled to an output portion of the electric motor, wherein the output portion is configured with an input end for receiving power from the electric motor and an output end for implementing a function of the power tool; wherein the electric motor comprises a stator, a rotor, and coil windings, the electric motor is configured with a maximum rotational speed, and the maximum rotational speed is an electric motor performance parameter; wherein the power tool further comprises a direct current (DC) power supply for supplying electrical energy to the electric motor; a driver circuit for driving the electric motor to output power, wherein the driver circuit comprises one or more drive switches, and energized states of the coil windings are switched by turning the one or more drive switches on and off; and a controller connected to the driver circuit and used for outputting a control signal to control the one or more drive switches of the driver circuit; wherein at least one drive switch in the driver circuit comprises a wide bandgap semiconductor switch, and a ratio of a maximum rotational speed at the input end of the output portion to the maximum rotational speed of the electric motor is less than or equal to 0.9.

17. A power tool, comprising:

an electric motor configured to be rotatably and drivingly coupled to an output portion of the electric motor; wherein the electric motor comprises a stator, a rotor, and coil windings disposed on the stator, and a cross section of each of the coil windings is non-circular; wherein the power tool further comprises a direct current (DC) power supply for supplying electrical energy to the electric motor; a driver circuit for driving the electric motor to output power, wherein the driver circuit comprises one or more drive switches, and energized states of the coil windings are switched by turning the one or more drive switches on and off; and a controller electrically connected to the driver circuit and used for outputting a control signal to control the one or more drive switches of the driver circuit, wherein at least one drive switch in the driver circuit comprises a gallium nitride transistor.

18. A traveling device, comprising:

a body; a traveling assembly comprising at least one traveling wheel supporting the body, wherein the traveling assembly is configured with a maximum output rotational speed; a traveling electric motor used for driving the at least one traveling wheel to rotate and comprising a stator, a rotor, and coil windings, wherein the traveling electric motor is configured with a maximum rotational speed, and the maximum rotational speed is an electric motor performance parameter; a transmission assembly mechanically connected to the traveling electric motor and the traveling assembly and configured with a transmission ratio; a direct current (DC) power supply for supplying electrical energy to the traveling electric motor;

a driver circuit for driving the traveling electric motor to output power, wherein the driver circuit comprises one or more drive switches, and energized states of the coil windings are switched by turning the one or more drive switches on and off; and

a controller connected to the driver circuit and used for outputting a control signal to control the one or more drive switches of the driver circuit; wherein a product of the maximum output rotational speed of the traveling assembly and the transmission ratio is defined as a required maximum rotational speed of the traveling electric motor, wherein at least one drive switch in the driver circuit comprises a wide bandgap semiconductor switch, and a ratio of the required maximum rotational speed of the traveling electric motor to the maximum rotational speed of the traveling electric motor is less than or equal to 0.9.

19. A traveling device, comprising:

a body;

a traveling assembly comprising at least one traveling wheel supporting the body, wherein the traveling assembly is configured with a maximum output rotational speed;

a traveling electric motor used for directly driving the at least one traveling wheel to rotate and comprising a stator, a rotor, and coil windings, wherein the traveling electric motor is configured with a maximum rotational speed, and the maximum rotational speed is an electric motor performance parameter;

a direct current (DC) power supply for supplying electrical energy to the traveling electric motor; a driver circuit for driving the traveling electric motor to output power, wherein the driver circuit comprises one or more drive switches, and energized states of the coil windings are switched by turning the one or more drive switches on and off; and

a controller connected to the driver circuit and used for outputting a control signal to control the one or more drive switches of the driver circuit; wherein at least one drive switch in the driver circuit comprises a wide bandgap semiconductor switch, and a ratio of the maximum output rotational speed of the traveling assembly to the maximum rotational speed of the traveling electric motor is less than or equal to 0.9.

20. A traveling device, comprising:

a body;

a traveling assembly comprising at least one traveling wheel supporting the body;

a traveling electric motor used for driving the at least one traveling wheel to rotate and comprising a stator, a rotor, and coil windings disposed on the stator, wherein a cross section of each of the coil windings is non-circular;

a direct current (DC) power supply for supplying electrical energy to the traveling electric motor; a driver circuit for driving the traveling electric motor to output power, wherein the driver circuit comprises one or more drive switches, and energized states of the coil windings are switched by turning the one or more drive switches on and off; and

a controller electrically connected to the driver circuit and used for outputting a control signal to control the one or more drive switches of the driver circuit, wherein at least one drive switch in the driver circuit comprises a gallium nitride transistor.

21. A power tool, comprising:

an electric motor;

wherein the electric motor comprises:

a rotor comprising a motor shaft rotating about a central axis; and

a stator comprising a stator core and coil windings, wherein the stator core comprises teeth, every two teeth define a slot for accommodating a coil winding of the coil windings, and the coil windings are used for generating a magnetic field;

wherein the coil winding disposed on each tooth is defined as an integral winding, and a shape of an outer edge of the integral winding changes with a shape of the slot so that the outer edge of the integral winding basically fits at least two sidewalls of the slot.

22. The power tool of claim 21, wherein the slot comprises a first sidewall adjacent to a yoke portion, the first sidewall comprises a plurality of curves, and a cross section of each turn of the coil winding comprises at least one side that basically fits a curve of the plurality of curves of the first sidewall.

23. The power tool of claim 22, wherein a cross section of at least one turn of the coil winding is non-circular.

24. The power tool of claim 23, wherein a cross section of the coil winding comprises a first edge and a second edge adjacent to the first edge, and a ratio of a length of the first edge to a length of the second edge is greater than 1.

25. The power tool of claim 24, wherein the first edge of the coil winding matches the first sidewall, and the second edge matches the tooth.

26. The power tool of claim 24, wherein the first edge of the coil winding matches the tooth, and the second edge matches the first sidewall.

27. The power tool of claim 21, wherein coil windings of at least two types are wound around each tooth, and the coil windings of the at least two types have a same cross-sectional area.

28. The power tool of claim 21, wherein coil windings of at least two types are wound around each tooth, and cross sections of adjacent coil windings are intermeshed with each other.

29. The power tool of claim 21, further comprising a battery pack, wherein a nominal voltage of the battery pack is less than or equal to 48 V.

30. The power tool of claim 21, wherein turns of the coil winding are thermally welded by laser.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| International application No. |
| --- |
| **PCT/CN2024/090730** |

**A. CLASSIFICATION OF SUBJECT MATTER**

H02P7/291(2016.01)i; H02K3/12(2006.01)i; B25F5/00(2006.01)n

According to International Patent Classification (IPC) or to both national classification and IPC

**B. FIELDS SEARCHED**

Minimum documentation searched (classification system followed by classification symbols)

H02P/-; H02K/-; B25F/-

Documentation searched other than minimum documentation to the extent that such documents are included in the fields searched

Electronic data base consulted during the international search (name of data base and, where practicable, search terms used)

CNTXT, ENTXTC, VEN: 传动, 氮化镓, 电动工具, 开关, 宽带隙, 宽禁带, 驱动, 砷化镓, 碳化硅, 直流, DC, gaas, gan, sic, 绕组, 扁, 贴合, power tool

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110405250 A (NANJING CHERVON INDUSTRY CO., LTD.) 05 November 2019 (2019-11-05) paragraphs 38-86, and figures 1-12 | 1-30 |
| Y | JP 2012023818 A (MITSUBISHI ELECTRIC CORP.) 02 February 2012 (2012-02-02) paragraphs 42-84, figures 1-32 | 1-30 |
| Y | CN 114094730 A (WELLING (WUHU) MOTOR MANUFACTURING CO., LTD.; MIDEA WELLING MOTOR TECHNOLOGY (SHANGHAI) CO., LTD.) 25 February 2022 (2022-02-25) paragraphs 50-143, and figures 1-11 | 23-26 |
| A | JP 2013010178 A (HITACHI KOKI CO., LTD.) 17 January 2013 (2013-01-17) entire document | 1-30 |
| A | CN 111917213 A (CHENGDU CRRC ELECTRIC CO., LTD.) 10 November 2020 (2020-11-10) entire document | 1-30 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 July 2024** | **05 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/090730**

| Patent document cited in search report | | | Publication date (day/month/year) | Patent family member(s) | | | Publication date (day/month/year) |
|---|---|---|---|---|---|---|---|
| CN | 110405250 | A | 05 November 2019 | None | | | |
| JP | 2012023818 | A | 02 February 2012 | JP | 5393605 | B2 | 22 January 2014 |
| CN | 114094730 | A | 25 February 2022 | None | | | |
| JP | 2013010178 | A | 17 January 2013 | JP | 5505746 | B2 | 28 May 2014 |
| CN | 111917213 | A | 10 November 2020 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310520472
- CN 202410399232
- CN 202420664274X
- CN 202410396182